# EUROPEAN PATENT APPLICATION

(11) **EP 1 152 344 A2**
(43) Date of publication of application: **07.11.2001**
(21) Application number: 01250136.7
(22) Date of filing: 18.04.2001
(51) Int. Cl.: G06F 15/78, G06F 9/445

(54) **Microcomputer and method for rewriting data on flash memory**

(30) Priority: 19.04.2000 JP 2000117963
(71) Applicant: NEC CORPORATION, Minato-ku Tokyo (JP)
(72) Inventor: Kondo, Takao, Minato-ku, Tokyo (JP)
(74) Representative: Patentanwälte Wenzel & Kalkoff

(57) **Abstract**

A microcomputer (10) stores a program in a ROM (14) for rewriting the program stored in a flash memory (13), and also stores in a nonvolatile memory (18) parameters to be used for the rewriting, as well as version information and lot information of the flash memory (13). A flash writer (12) selects a corrected program based on the version information, wherein a CPU (16) executes the corrected program while using the parameters stored in the nonvolatile memory (18) and the parameters selected based on the lot information.

## Description

### BACKGROUND OF THE INVENTION

### 1. Field of the Invention

The present invention relates to a microcomputer and a method for rewriting data on a flash memory and, more particularly, to a rewrite control technique for rewriting the contents stored in a flash memory such as mounted on a single chip microcomputer.

### 2. Description of the Related Art

A single chip microcomputer (hereinafter, simply referred to as microcomputer) generally has a plurality of system functions for the sake of responding to a variety of market needs. In a microcomputer, a selected one of a plurality of different programs is stored in a memory for specifying one of the plurality of system functions. The memories installed for storing programs include flash memories which are electrically programmable and erasable. Microcomputer vendors provide users with the environment for writing a user-application-specific program so that the users can rewrite the contents of the program in the flash memory based on various modifications to the specifications.

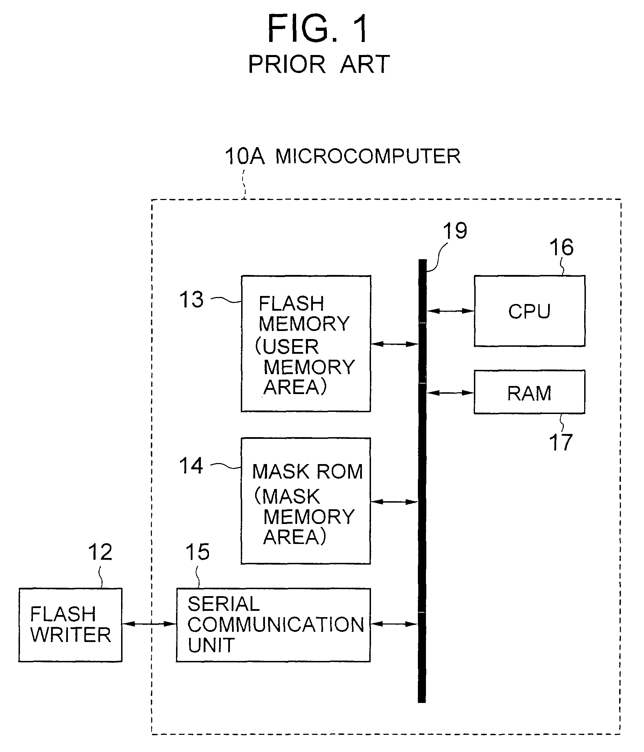

Fig. 1 shows a block diagram for the rewriting of data in a flash memory. In the flash memory rewriting, a microcomputer 10A incorporating therein a flash memory 13 is connected to a flash writer 12 disposed outside the microcomputer 10A. The microcomputer 10A includes, in addition to the flash memory 13 having a user memory area, a mask ROM 14 storing a specified program for rewriting the data in the flash memory 13, a serial communication unit 15 for serially communicating the microcomputer 10A with the flash writer 12, a CPU 16 for executing the programs in the flash memory 13 and the mask ROM 14, and a RAM 17 for temporarily storing data therein. These components are connected to each other via an internal bus 19 installed in the microcomputer 10A.

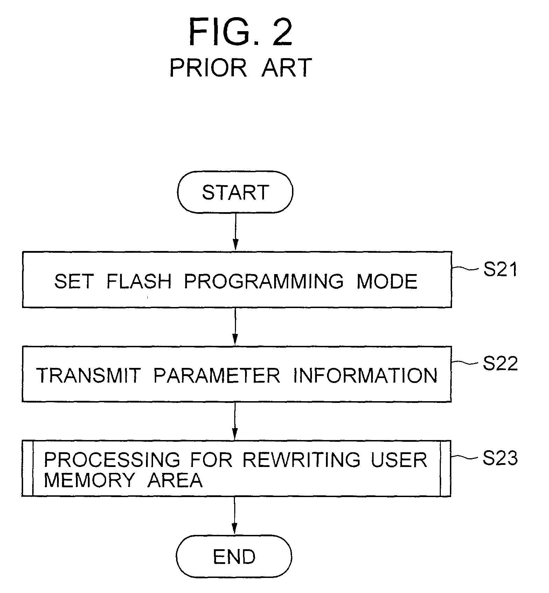

Fig. 2 is a flowchart showing the processing in rewriting the flash memory of Fig. 1. The flash writer 12 transmits/receives information necessary for rewriting the contents stored in the user memory area of the flash memory 13, to/from the microcomputer 10A via the serial communication unit 15. The flash writer 12 makes predetermined operations to set the CPU 16 to a flash programming mode (step S21), and then transmits parameters including programming and erasing voltages and programming and erasing times (step S22) for the rewriting. Based on the parameters received, the microcomputer 10A executes the program (flash firmware) stored in the mask memory area of the mask ROM 14, thereby starting the process for rewriting the user memory area (step S23). The flash writer 12 transmits data for updating the data in the user memory area. The microcomputer 10A rewrites this data into the user memory area.

A user who operates the flash writer 12 recognizes the type and version of the flash memory 13 from the stamp information printed on the microcomputer 10A, and selects the parameters, such as programming voltage and programming time that are considered to be optimal for rewriting the flash memory 13.

In the above procedure, due to the limitation of the area for the stamp information to be printed thereon, it is usual that the version information of the microcomputer can be printed thereon, and not the lot information during fabrication (i.e., information about differences in characteristics resulting from variations of process conditions during fabrication).

Instead of the control of setting all the parameters from the flash writer, the mask ROM 13 may store some parameters, in which case some burden to the user can be alleviated.

Because of variations in the process conditions during fabrication, flash memories 13 of the same type and the same version often vary in optimum programming voltage, programming time, and so on from one fabrication lot to another. Thus, the use of the parameters selected by the user based on the stamp information alone and the use of the default parameters provide no guarantee that the user memory area is rewritten under the optimum conditions. Moreover, there is a further problem of misreading the version information printed on the microcomputer 10A.

### SUMMARY OF THE INVENTION

It is an object of the present invention to solve the foregoing problems in the conventional technique for rewriting the flash memory, and to provide a microcomputer and a method of rewriting data in a flash memory in which the rewriting for the flash memory is performed under optimum conditions.

The present invention provides a microcomputer unit comprising a flash memory for storing specified data, a ROM storing a program for rewriting the specified data stored in the flash memory, a nonvolatile memory for storing version information and/or lot information of the flash memory, and a CPU for responding to an external command to execute the program for rewriting the specified data in the flash memory based on the version information and/or lot information stored in the nonvolatile memory.

The present invention also provides a method for rewriting data stored in a flash memory installed in a microcomputer by using a CPU, the method comprising the steps of:
storing in the microcomputer a first program for rewriting the data stored in the flash memory;
storing version information and/or lot information of the flash memory in the microcomputer;
determining parameters for the rewriting based on the version information and/or lot information; and
running the first program on the CPU to rewrite the data in the flash memory based on the parameters.

In accordance with the microcomputer and the method of rewriting data in a flash memory of the present invention, whether or not the rewrite control program and parameters stored in the mask ROM are available for the rewrite processing for the flash memory is determined based on the version information and/or lot information read from the nonvolatile memory. Thus, the rewrite processing to the flash memory is executed under the optimum conditions, whereby the rewrite processing improves in reliability and efficiency.

### BRIEF DESCRIPTION OF THE DRAWINGS

Fig. 1 is a block diagram showing the conventional rewriting of data in a flash memory of a microcomputer;
Fig. 2 is a flowchart showing the processing in the conventional rewriting in the flash memory of Fig. 1.
Fig. 3 is a block diagram of a flash writer and a microcomputer including a flash memory to be rewritten, showing a rewrite control process according to an embodiment of the present invention; and
Fig. 4 is a flowchart showing the processing in rewriting of the flash memory shown in Fig. 2.

### DETAILED DESCRIPTION OF THE PREFERRED EMBODIMENT

Hereinafter, in conjunction with the embodiment of the present invention and with reference to the drawings, description will be given of a microcomputer and a method of rewriting data in a flash memory according to an embodiment of the present invention.

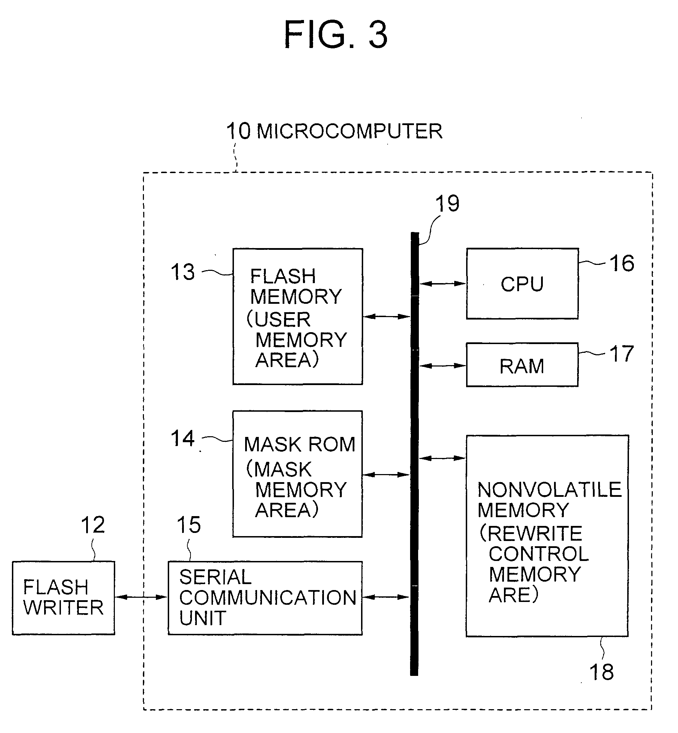

Referring to Fig. 3, there is shown a flash writer 12 and a microcomputer 10 including a flash memory 13 to be written, wherein a rewrite control operation is executed according to an embodiment of the present invention. The microcomputer 10 includes, in addition to the flash memory 13, a mask ROM 14, a serial communication unit 15, a CPU 16, a RAM 7, and a nonvolatile memory 18. All these components are connected to an internal bus 19.

The flash memory 13 has a user memory area of e.g. 1 Mbyte, into which programs according to user applications are stored. The mask ROM 14 has a mask memory area of e.g. 8 Kbytes, and stores flash firmware for performing write control conducted to the flash memory 13. Besides, the mask ROM 14 stores default parameters indicating the programming voltage, programming time, and other parameters necessary for the write control, and flash identification information which identifies the type, version, lot information etc. of the flash memory 13. The serial communication unit 15 is implemented as a serial or parallel interface. The serial communication unit 15 transmits/receives information necessary for the write control to/from the flash writer 12 disposed outside the microcomputer 10.

The CPU 16 is connected via the internal bus 19 to the functional units including the flash memory 13, the mask ROM 14, the serial communication unit 15, the RAM 17, and the nonvolatile memory 18. The CPU 16 executes write/read operations to the individual functional units. The nonvolatile memory 18 stores updated flash firmware or parameters, and version information indicating whether or not an update is made to the flash firmware or parameters.

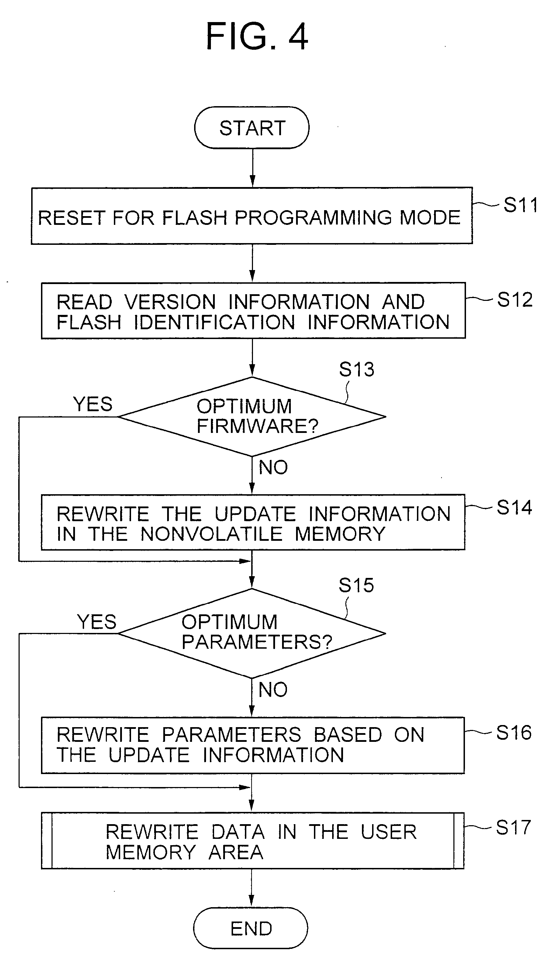

Referring to Fig. 4, there is shown a flowchart of the procedure in rewriting the flash memory of Fig. 3. The flash writer 12 maintains the source terminal Vpp of the microcomputer 10 at high voltage, thereby resetting the microcomputer 10 to effect a flash programming mode (step S11). After the resetting, the flash writer 2 is capable of transmitting/receiving necessary data to/from the microcomputer 10 via the serial communication unit 15.

The flash writer 12 initially reads the version information and the flash identification information (step S12). The flash writer 12 stores therein information for the types, versions and lots of the flash memories, and thus can determine the program version and parameters optimum to the flash-memory rewrite processing based on the flash identification information.

The flash writer 12 determines whether or not the flash firmware stored in the mask ROM 14 or the nonvolatile memory 18 is optimum for the rewriting of the flash memory 13 (step S13), and if "YES," proceeds to step S15. If "NO," the flash writer 2 transmits the update information including the optimum flash firm and the version information of the flash firm stored in the flash writer 12. The update information is thereby stored into a rewriting memory area of the nonvolatile memory 18 (step S14). It is to be noted that modified portions of the flash firmware instead may be stored exclusively.

The flash writer 12 then determines whether or not the parameters stored in the mask ROM 14 or the nonvolatile memory 18 are optimum for the rewriting of the flash memory 13 based on their version information and the flash identification information (step S15). If "YES," the process advances to step S17. If "NO," the flash writer 12 transmits the update information including the optimum parameters and the version information of the parameters. The update information is thereby stored into the rewriting memory area of the nonvolatile memory 18 (step S16).

The flash writer 12 then transmits a command for starting the processing for rewriting the user memory area. The CPU 16, upon receiving this command, refers to the version information of the flash firmware and parameters in the rewriting memory area of the nonvolatile memory 18. If there is update information stored, the CPU 16 selects the flash firmware or parameters including the update information in the rewriting memory area. Otherwise, the CPU 16 selects the default flash firmware or parameters in the mask memory area. Based on the request from the CPU 16, the flash writer 12 transmits data to be stored into the user memory area. The CPU 16 executes the selected flash firmware to rewrite the data in the user memory area with the data from the flash writer 12 in accordance with the parameters selected (step S17).

The optimum value of the voltage Vpp to be used for the write processing varies, for example, from 10.0 V to 10.3 V or so. The optimum value of the programming time for 1-byte data varies from 50 *µ* s to 200 *µ* s or so. The characteristics of flash memories include optimum values that vary from one lot to another due to variations of thicknesses of the gate oxide films and the impurity concentrations in the channels of the transistors constituting the flash memory cells. Thus, flash memories after fabrication are tested for the characteristics thereof. The flash writer 12 manages the results of the characteristic tests on the flash memories corresponding to the flash identification information, and stores the optimum conditions for the flash memory writing processing lot by lot.

According to the above-described embodiment, the flash identification information is read and used to determine availability of the firmware to the flash memory so that minimum and sufficient items of the flash rewrite control information stored in the microcomputer are rewritten. Thus, the rewrite processing to the flash memory is performed under the optimum conditions.

The present invention has been described heretofore in conjunction with the preferred embodiment thereof. The microcomputer and the method of rewriting data in a flash memory according to the present invention are, however, not limited to the configurations of the embodiment described above: Microcomputers and methods of rewriting data in a flash memory obtained through various changes and modifications to the configuration of the embodiment described above also fall within the scope of the present invention.

## Claims

1. A microcomputer unit comprising a flash memory (13) for storing specified data, a ROM (14) storing a program for rewriting the specified data stored in said flash memory (13), and a CPU (16) for responding to an external command to execute the program for rewriting the specified data in said flash memory (13), **characterized in that** a nonvolatile memory (18) stores version information and/or lot information of said flash memory (13), and said CPU (16) rewrites the data in said flash memory (13) based on the version information and/or lot information.

2. The microcomputer unit as defined in claim 1, wherein said nonvolatile memory (13) has a memory area to be used for storing parameters in the rewriting of the data in said flash memory (13) by said CPU (16).

3. The microcomputer unit as defined in claim 1, wherein said nonvolatile memory (18) has a memory area to be used for storing at least a part of a corrected program corrected from the program stored in said ROM (14).

4. A method for rewriting data stored in a flash memory installed in a microcomputer by using a CPU, the method comprising the steps of:
storing in the microcomputer (10) a first program for rewriting the data stored in the flash memory (13);
storing version information and/or lot information of the flash memory (13) in the microcomputer (10);
determining parameters for the rewriting based on the version information and/or lot information; and
running the first program on the CPU (16) to rewrite the data in the flash memory (13) based on the parameters.

5. The method as defined in claim 4, wherein the storing step stores the information in a nonvolatile memory (18).

6. The method as defined in claim 4, further comprising the steps of selecting a second program among a plurality of programs based on the version information and/or the lot information, and running the second program instead of the first program on said CPU (16).
